# EUROPEAN PATENT APPLICATION

(11) **EP 4 786 229 A1**
(43) Date of publication of application: **05.08.2026**
(21) Application number: 24890690.1
(22) Date of filing: 13.11.2024
(51) Int. Cl.: B60J 1/00, H05B 3/86

(54) **VEHICLE WINDOW ASSEMBLY AND VEHICLE**

(30) Priority: 13.11.2023 CN 202311511218
(71) Applicant: Fuyao Glass Industry Group Co., Ltd., Fuqing, Fujian 350300 (CN)
(72) Inventor: YUAN, Yaping, Fuzhou, Fujian 350300 (CN); REN, Peng, Fuzhou, Fujian 350300 (CN); LI, Weijun, Fuzhou, Fujian 350300 (CN); YANG, Jing, Fuzhou, Fujian 350300 (CN)
(74) Representative: Mewburn Ellis LLP
(86) International application number: PCT/CN2024/131675
(87) International publication number: WO 2025/103335

(57) **Abstract**

A vehicle window assembly (100) and a vehicle (1000) are provided. The vehicle window assembly includes a glass plate (30), a heating element (10), and a sensor (20). The sensor is disposed on an inner side of the glass plate, the sensor comprises a first sensor (21) and a second sensor (22). The glass plate includes a first signal transmission region (A) and a second signal transmission region (B). The first signal transmission region is a signal transmission region of the glass plate for the first sensor, the second signal transmission region is a signal transmission region of the glass plate for the second sensor, and the first signal transmission region is at least partially located in the second signal transmission region. The heating element includes at least one heating wire (11). The at least one heating wire is kept clear of the first signal transmission region and is at least partially disposed in the second signal transmission region. The vehicle window assembly can reduce the extent to which the first sensor is physically blocked, ensure the heating effect on the first signal transmission region, and improve the accuracy of the optical information acquired by the sensor.

## Description

This application claims priority to Chinese Patent Application No. 202311511218.9, filed November 13, 2023, and entitled "VEHICLE WINDOW ASSEMBLY AND VEHICLE", the entire disclosure of which is incorporated herein by reference.

### TECHNICAL FIELD

The present disclosure relates to the field of vehicle technology, and in particular, to a vehicle window assembly and a vehicle.

### BACKGROUND

With the development of autonomous driving, advanced driving assistance systems (ADAS) are becoming increasingly important. ADAS captures road image information through cameras, and then an in-vehicle infotainment system processes this road image information according to algorithms. Therefore, obtaining true and accurate image information is particularly important.

The presence of water vapor, fog, frost, and the like on a vehicle window glass affects the acquisition of image information and thus impacts ADAS performance. In the related art, heating wires are used to heat a signal transmission region on the vehicle window glass to remove water vapor, fog, frost, and the like. However, at present, the heating wires on the vehicle window glass traverse the entire signal transmission region. For a binocular camera or a multi-camera, the heating wires affect the optical signal transmission of wide-angle lens in the binocular camera or the multi-camera. That is, the heating wires physically block the optical signal from the wide-angle lens, affecting the light entering the camera, and consequently affecting the processing and judgment of image information by the in-vehicle infotainment system. Additionally, in nighttime scenarios, the heating wires reflect light, causing light points captured by a camera to become light pillars, thereby affecting the accuracy of the image information obtained by the camera.

### SUMMARY

The purpose of the disclosure is to provide a vehicle window assembly and a vehicle, which can reduce the physical blockage of heating wires on wide-angle lens in a camera and thus improve the accuracy of an image information obtained by the camera.

An aspect of the disclosure relates to a vehicle window assembly, which includes a glass plate, a heating element, and a sensor. The sensor is disposed on an inner side of the glass plate. The sensor includes a first sensor and a second sensor, and the first sensor and the second sensor are spaced apart from each other. The glass plate includes a first signal transmission region and a second signal transmission region. The first signal transmission region is a signal transmission region of the glass plate for the first sensor, the second signal transmission region is a signal transmission region of the glass plate for the second sensor, and the first signal transmission region is at least partially located in the second signal transmission region. The heating element includes at least one heating wire, and the at least one heating wire is kept clear of the first signal transmission region and is at least partially disposed in the second signal transmission region.

It may be understood that, since the heating wire is arranged to be kept clear of the first signal transmission region, when the first sensor is used to obtain optical information, the heating wire can be prevented from physically blocking the light from entering the first sensor, thereby facilitating the first sensor in obtaining complete optical information. In addition, such arrangement can prevent the heating wire from reflecting light, thereby avoiding affecting the accuracy of the optical information obtained by the first sensor. The heating wire is partially distributed in the second signal transmission region, which can ensure the heating effect of the heating wire on the second signal transmission region, so that the heating wire can remove water, fog, or frost from the glass plate.

In a possible embodiment, the at least one heating wire is disposed around at least a portion of a periphery of the first signal transmission region.

It may be understood that, the heating wire is disposed along a portion of the periphery of the first signal transmission region, allowing the heat generated by the heating wire to be quickly transferred through the glass plate to the first signal transmission region, ensuring the heating effect on the first signal transmission region.

In a possible embodiment, each heating wire includes a first segment and a second segment. The first segment includes two heating section groups, and the two heating section groups are oppositely disposed in a length direction of the glass plate. Each heating section group includes multiple first sub-section groups and at least one connecting segment. Each connecting segment connects two adjacent first sub-section groups. The multiple first sub-section groups of each heating section group are disposed in parallel and spaced apart in a width direction of the glass plate. Two adjacent first sub-section groups are electrically connected via a corresponding connecting segment, and each heating section group has a first free end and a second free end. Two ends of the second segment are respectively electrically connected to the first free ends of the two heating section groups, and the second segment is disposed along a portion of an edge of the first signal transmission region.

In a possible embodiment, the heating element further includes two heating electrodes. Each heating wire further includes two third segments, and the two third segments are oppositely disposed in the length direction of the glass plate. An end of each of the two third segments is electrically connected to the second free end of a corresponding one of the two heating section groups, and another end of each of the two third segments is electrically connected to a corresponding one of the two heating electrodes.

In a possible embodiment, the second segment includes three second sub-segments. Each second sub-segment is straight. The three second sub-segments are sequentially connected, and two mutually connected second sub-segments form an included angle. Two outer second sub-segments among the three second sub-segments are respectively electrically connected to the first free ends of the two heating section groups, and are respectively disposed along portions of edges of two opposite lengthwise sides of the first signal transmission region. A middle second sub-segment among the three second sub-segments is disposed along a portion of an edge of a widthwise end of the first signal transmission region.

In a possible embodiment, the second segment is straight, and the second segment extends in the length direction of the glass plate. The connecting segments of the two heating section groups are respectively disposed along portions of edges of two opposite lengthwise sides of the first signal transmission region, and the second segment is disposed along a portion of an edge of a widthwise end of the first signal transmission region.

In a possible embodiment, the second segment is configured in a zigzag pattern. The second segment includes multiple third sub-segments and multiple connecting sub-segments, and two adjacent third sub-segments are electrically connected via a corresponding connecting sub-segment. Two outer third sub-segments among the multiple third sub-segments are respectively electrically connected to the first free ends of the two heating section groups. The second segment is disposed along a portion of an edge of a widthwise end of the first signal transmission region, and the connecting segments of the two heating section groups are respectively disposed along portions of edges of two opposite lengthwise sides of the first signal transmission region.

In a possible embodiment, each third segment includes a straight segment and a bent segment, and the straight segment and the bent segment are connected to each other. Free ends of the two straight segments are respectively electrically connected to the second free ends of the two heating section groups, and free ends of the two bent segments are respectively electrically connected to the two heating electrodes. The two straight segments are disposed along a portion of an edge of another widthwise end of the first signal transmission region.

In a possible embodiment, in the width direction of the glass plate, a distance between two adjacent first sub-section groups in each heating section group ranges from 5mm to 50mm.

In a possible embodiment, in the width direction of the glass plate, each first sub-section group includes two first sub-sections and a transition segment, and the two first sub-sections extend in the length direction of the glass plate. In the length direction of the glass plate, the transition segment is connected to ends of the two first sub-sections that are close to each other. In the width direction of the glass plate, a distance between the two first sub-sections of each first sub-section group ranges from 5mm to 50mm.

In a possible embodiment, in the width direction of the glass plate, a width of the first signal transmission region is denoted as *L*0, wherein *L*0 satisfies 50mm ≤ *L*0 ≤ 100mm.

In a possible embodiment, each third sub-segment extends in the length direction of the glass plate. Each connecting sub-segment extends in the width direction of the glass plate. The multiple connecting sub-segments are spaced apart in the length direction of the glass plate, and each third sub-segment is used to electrically connect ends of two adjacent connecting sub-segments that are close to each other. In the width direction of the glass plate, a width *w*1 of each connecting sub-segment is less than or equal to 20mm.

In a possible embodiment, in the length direction of the glass plate, a length *w*2 of each third sub-segment is greater than or equal to 5mm.

In a possible embodiment, the heating wire is an enameled wire or a silver paste printing wire.

In a possible embodiment, a total length of the heating wire ranges from 0.8m to 5m.

In a possible embodiment, the heating wire is disposed around at least three edges of the first signal transmission region.

In a possible embodiment, the vehicle window assembly further includes a rain sensor, and a distance between the heating wire and the rain sensor is greater than or equal to 30mm.

In a possible embodiment, the glass plate is a monolithic glass, and the heating element is fixed between the glass plate and the sensor.

In a possible embodiment, the glass plate is a laminated glass, the laminated glass includes a first glass plate, an intermediate layer, and a second glass plate, wherein the intermediate layer is bonded between the first glass plate and the second glass plate, and the heating element is fixed between the first glass plate and the sensor.

In a possible embodiment, the first sensor is implemented as at least one first sensor, and the second sensor is implemented as at least one second sensor.

In a possible embodiment, the first sensor and/or the second sensor is/are selected from at least one of a visible light camera, an infrared camera, or a laser radar.

Another aspect of the disclosure relates to a vehicle, which includes a vehicle body and the vehicle window assembly as described above. The vehicle window assembly is mounted to the vehicle body.

Beneficial effect of the disclosure lies in the following. The first signal transmission region is at least partially located in the second signal transmission region. Since the heating wire is arranged to be kept clear of the first signal transmission region, when the first sensor is used to obtain optical information, the heating wire can be prevented from physically blocking the light from entering the first sensor, thereby facilitating the first sensor in obtaining complete optical information. In addition, such arrangement can prevent the heating wire from reflecting light, thereby avoiding affecting the accuracy of the optical information obtained by the first sensor. The heating wire is partially distributed in the second signal transmission region, which can ensure the heating effect of the heating wire on the second signal transmission region, so that the heating wire can remove water, fog, or frost from the glass plate. The heating wire is disposed along a portion of the periphery of the first signal transmission region, allowing the heat generated by the heating wire to be quickly transferred through the glass plate to the first signal transmission region, ensuring the heating effect on the first signal transmission region.

### BRIEF DESCRIPTION OF THE DRAWINGS

FIG. 1 is a schematic top view of a vehicle window assembly provided in an embodiment of the disclosure.
FIG. 2 is a schematic partial cross-sectional view of FIG. 1, taken along line I-I.
FIG. 3 is a schematic top view of a vehicle window assembly provided in another embodiment of the disclosure.
FIG. 4 is a partial cross-sectional schematic view of FIG. 3, taken along line II-II.
FIG. 5 is a partial cross-sectional view of a vehicle window assembly provided in another embodiment of the disclosure.
FIG. 6 is a schematic top view of a vehicle window assembly provided in yet another embodiment of the disclosure.
FIG. 7 is a schematic top view of a vehicle window assembly provided in yet another embodiment of the disclosure.
FIG. 8 is a partial cross-sectional view of a vehicle window assembly provided in yet another embodiment of the disclosure.
FIG. 9 is a schematic structural view of a vehicle provided in an embodiment of the disclosure.

### DETAILED DESCRIPTION

The technical solutions in the embodiments of the disclosure will be described clearly and completely below with reference to the accompanying drawings in the embodiments of the disclosure. Obviously, the described embodiments are merely some but not all of the embodiments of the disclosure. Based on the embodiments in the disclosure, all other embodiments obtained by a person of ordinary skill in the art without creative efforts shall fall within the protection scope of the disclosure.

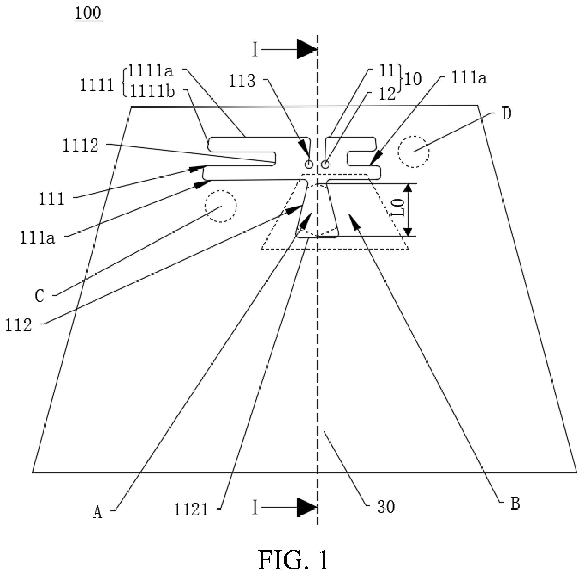

The disclosure provides a vehicle window assembly 100. Reference is made to FIG. 1 to FIG. 7 in conjunction. The vehicle window assembly 100 includes a glass plate 30, a sensor 20, and a heating element 10. The sensor 20 is disposed on an inner side of the glass plate 30. The sensor 20 includes a first sensor 21 and a second sensor 22, and the first sensor 21 and the second sensor 22 are spaced apart from each other. The glass plate 30 includes a first signal transmission region *A* and a second signal transmission region *B*. The first signal transmission region *A* is a signal transmission region of the glass plate 30 for the first sensor 21, and the second signal transmission region *B* is a signal transmission region of the glass plate 30 for the second sensor 22. The first signal transmission region *A* is at least partially located in the second signal transmission region *B*. The heating element 10 includes at least one heating wire 11. The at least one heating wire 11 is kept clear of the first signal transmission region *A* and is at least partially disposed in the second signal transmission region *B*.

It may be understood that, in adverse weather conditions such as rain, snow, and frost, the glass plate 30 is prone to fogging or frosting, which may prevent the sensor 20 from capturing a clear view of the area ahead. Heating the glass plate 30 can accelerate defogging and defrosting, thereby enabling the sensor 20 to capture a clear forward view.

It may be noted that, in the disclosure, the sensor 20 at least includes an image sensor, and the image sensor may be, for example, a camera. The camera can capture an image of the area in front of the glass plate 30 through the first signal transmission region *A* and the second signal transmission region *B*.

In a possible embodiment, the sensor 20 is a binocular camera, where one lens is a narrow-angle lens, i.e., the first sensor 21, and the other lens is a wide-angle lens, i.e., the second sensor 22. In other possible embodiments, the sensors 20 may be implemented as two sensors, and both of the sensors 20 are monocular cameras, where the lens of one sensor 20 is the narrow-angle first sensor 21, and the lens of the other sensor 20 is the wide-angle second sensor 22.

In the embodiment of the disclosure, the first sensor 21 is a narrow-angle lens, and the second sensor 22 is a wide-angle lens. The range of field of view (FOV) of the first sensor 21 satisfies FOV < 90°. The range of FOV of the second sensor 22 satisfies 90° < FOV < 180°. Optionally, the range of FOV of the first sensor 21 satisfies 20° < FOV < 40°. Optionally, the range of FOV of the first sensor 21 satisfies 40° < FOV < 90°.

According to the law of perspective, which indicates that near objects appear larger and far objects appear smaller, as captured by the sensor 20 during imaging, that is, a wider FOV corresponds to a shorter accurate detection distance and a narrower FOV corresponds to a longer accurate detection distance. Since the FOV of the first sensor 21 is smaller than the FOV of the second sensor 22, the imaging area of the first sensor 21 is smaller than the imaging area of the second sensor 22. It may be understood that, in this embodiment, the first sensor 21 and the second sensor 22 of the sensor 20 are disposed adjacent to each other, and the vision of the first sensor 21 is smaller than the vision of the second sensor 22. Therefore, the imaging area of the first sensor 21 on the glass plate 30 is included in part of the imaging area of the second sensor 22 on the glass plate 30, that is, the first signal transmission region *A* is partially located in the second signal transmission region *B*. Preferably, in the disclosure, at least two-thirds of the first signal transmission region *A* is located in the second signal transmission region *B*.

In the disclosure, the first signal transmission region *A* is at least partially located in the second signal transmission region *B*. Since the heating wire 11 is arranged to be kept clear of the first signal transmission region *A*, when the first sensor 21 is used to obtain optical information, the heating wire 11 can be prevented from physically blocking the light from entering the first sensor 21, thereby facilitating the first sensor 21 in obtaining complete optical information. In addition, such arrangement can prevent the heating wire 11 from reflecting light, thereby avoiding affecting the accuracy of the optical information obtained by the first sensor 21. The heating wire 11 is partially distributed in the second signal transmission region *B*, which can ensure the heating effect of the heating wire 11 on the second signal transmission region *B*, so that the heating wire 11 can remove water, fog, or frost from the glass plate 30.

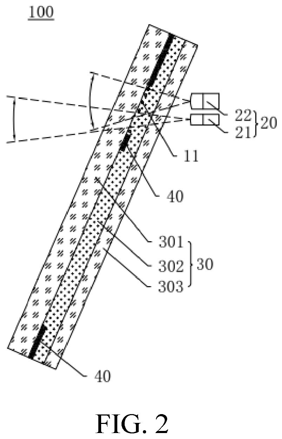

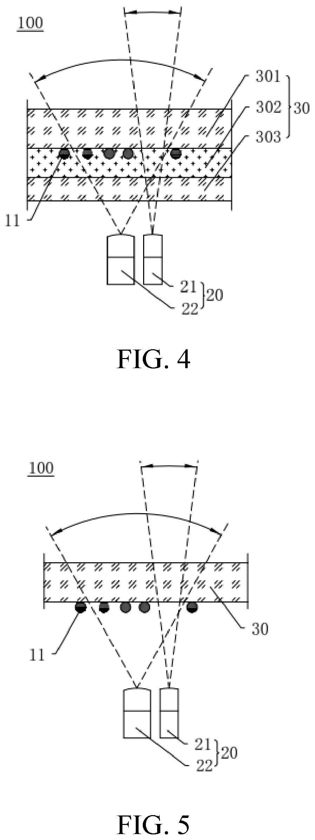

In a possible embodiment, as illustrated in FIG. 4 and FIG. 5, the first sensor 21 and the second sensor 22 of the sensor 20 are spaced apart in a horizontal direction. In other possible embodiments, the first sensor 21 and the second sensor 22 of the sensor 20 may also be spaced apart in a vertical direction, as illustrated in FIG. 2. It may be understood that, the first sensor 21 and the second sensor 22 of the sensor 20 may also be spaced apart in other types of arrangements, which are not limited in the disclosure.

In a possible embodiment, the vehicle window assembly 100 further includes a rain sensor (not illustrated in the drawings) and an electronic toll collection (ETC) device (not illustrated in the drawings). The rain sensor is configured to adjust the action of the windshield wiper according to the amount of rainwater on the glass plate 30, and the ETC device is configured for automatic toll collection when the vehicle 1000 passes through highways or bridges. In this embodiment, as illustrated in FIG. 1, the glass plate 30 is also provided with a first light-transmitting region *C* and a second light-transmitting region *D*. The first light-transmitting region *C* allows signals from the rain sensor to pass through, and the second light-transmitting region *D* is used for the signal of the ETC to pass through. The rain sensor is mounted in the inner side of the glass plate 30 and corresponds to the position of the first light-transmitting region *C* of the glass plate 30. The ETC device is mounted in the inner side of the glass plate 30 and corresponds to the position of the second light-transmitting region *D* of the glass plate 30. The rain sensor and the ETC device are respectively located on opposite sides of the sensor 20 and are spaced apart from the sensor 20.

In a possible embodiment, reference is made to FIG. 2 and FIG. 4 again. The glass plate 30 may be a laminated glass. The laminated glass includes a first glass plate 301, an intermediate layer 302, and a second glass plate 303. The intermediate layer 302 is bonded between the first glass plate 301 and the second glass plate 303. The heating element 10 is fixed between the first glass plate 301 and the sensor 20.

In this embodiment, the first glass plate 301 faces the exterior of the vehicle 1000, and the second glass plate 303 faces the interior of the vehicle 1000. The material of the intermediate layer 302 may be selected from at least one of transparent polyvinyl butyral (PVB), ethylene vinyl acetate (EVA), polyacrylate (PA), polymethyl methacrylate (PMMA), ionoplast interlayer (SentryGlas^{®} Plus, SGP), or polyurethane (PU), so as to avoid hindering the sensor 20 from acquiring external environment information through the first glass plate 301.

Specifically, the heating element 10 may be disposed on a surface of the first glass plate 301 close to the intermediate layer 302, or disposed between the first glass plate 301 and the intermediate layer 302, or disposed on at least one surface of the intermediate layer 302, or disposed between the intermediate layer 302 and the second glass plate 303, or disposed on at least one surface of the second glass plate 303.

In a possible embodiment, reference is made to FIG. 5, and the glass plate 30 may also be a monolithic glass. The heating element 10 is fixed between the glass plate 30 and the sensor 20. Specifically, the heating element 10 may be disposed on an inner surface of the glass plate 30. The glass plate 30 may be a tempered glass, or may be a semi-tempered glass or an ordinary glass.

In a possible embodiment, the heating wire 11 is an enameled wire or a silver paste printing wire.

In the case where the heating wire 11 is an enameled wire, the wire diameter of the heating wire 11 ranges from 0.08mm to 0.5mm. Preferably, the wire diameter of the heating wire 11 ranges from 0.08mm to 0.15mm. Specifically, the wire diameter of the heating wire 11 may be 0.08mm, 0.12mm, 0.15mm, 0.17mm, 0.19mm, 0.21mm, 0.23mm, 0.25mm, 0.27mm, 0.29mm, 0.31mm, 0.33mm, 0.35mm, 0.38mm, 0.41mm, 0.44mm, 0.47mm, 0.5mm, etc., which is not limited in the disclosure.

In the case where the heating wire 11 is a silver paste printing wire, the printing line width of the silver paste printing wire ranges from 0.1mm to 1.0mm, and the brushing thickness of the silver paste printing wire ranges from 3µm to 20µm.

In a possible embodiment, the total length of the heating wire 11 ranges from 0.8m to 5m. Specifically, the total length of the heating wire 11 may be 0.8m, 1m, 1.2m, 1.4m, 1.5m, 1.6m, 1.8m, 2m, 2.2m, 2.4m, 2.6m, 2.8m, 3m, 3.2m, 3.4m, 3.6m, 3.8m, 4m, 4.2m, 4.4m, 4.6m, 4.8m, 5m, etc., which is not limited in the disclosure.

In the case where the heating wire 11 is an enameled wire, the total length of the enameled wire ranges from 1.5m to 5m. Specifically, when the wire diameter of the enameled wire is 0.08mm, the total length of the enameled wire ranges from 1.5m to 2.5m. When the wire diameter of the enameled wire is 0.12mm, the total length of the enameled wire ranges from 2.5m to 4m. When the wire diameter of the enameled wire is 0.15mm, the total length of the enameled wire ranges from 3m to 5m.

In the case where the heating wire 11 is a silver paste printing wire, that is, the heating wire 11 is formed by printing silver paste, the total length of the silver paste printing wire ranges from 0.8m to 2m.

It may be noted that, in the embodiment of the disclosure, the first signal transmission region *A* is substantially trapezoidal, and the second signal transmission region *B* is substantially trapezoidal. In other embodiments, depending on the relative positional relationship between the glass plate 30 and the first sensor 21/the second sensor 22, the first signal transmission region *A* and/or the second signal transmission region *B* may also be in other shapes such as an ellipse.

In the embodiment of the disclosure, as illustrated in FIG. 1, in the width direction of the glass plate 30, the width of the first signal transmission region *A* is denoted as *L*0, and *L*0 satisfies 50mm ≤ *L*0 ≤ 100mm. Specifically, *L*0 may be 50mm, 55mm, 60mm, 65mm, 70mm, 75mm, 80mm, 85mm, 90mm, 100mm, etc. The width of the first signal transmission region *A* may be understood as the distance between the two farthest points in the first signal transmission region *A* in the width direction of the glass plate 30. The width direction of the first signal transmission region *A* is consistent with the width direction of the glass plate 30, and the length direction of the first signal transmission region *A* is consistent with the length direction of the glass plate 30.

It may be noted that, in the embodiments of the disclosure, illustration is made only by taking the sensor 20 as a binocular camera and the first sensor 21 and the second sensor 22 in the sensor 20 being spaced apart in the horizontal direction as an example.

Referring to FIG. 1, a first embodiment of the heating element 10 of the vehicle window assembly 100 is provided. In this embodiment, the heating element 10 includes the heating wire 11 and heating electrodes 12. Each end of the heating wire 11 is connected to one heating electrode 12. By energizing the heating electrodes 12, current flows through the heating wire 11, thereby generating heat.

In this embodiment, the heating wire 11 includes a first segment 111, a second segment 112, and a third segment 113. The first segment 111 is electrically connected to the second segment 112, and the first segment 111 is electrically connected to the heating electrodes 12 through the third segment 113.

The first segment 111 includes two heating section groups 111a, and the two heating section groups 111a are oppositely disposed in the length direction of the glass plate 30. Each heating section group 111a includes multiple first sub-section groups 1111 and at least one connecting segment 1112, where each connecting segment connects two adjacent first sub-section groups 1111. The multiple first sub-section groups 1111 of each heating section group 111a are disposed in parallel and spaced apart in the width direction of the glass plate 30. Each connecting segment 1112 is used to electrically connect the ends of two adjacent first sub-section groups 1111 that are close to each other. Each heating section group 111a includes a first free end and a second free end. Specifically, the first free end and the second free end are respectively the ends of the two outer first sub-section groups 1111 of each heating section group 111a that are not connected to the connecting segment 1112. The first free end is close to the bottom of the heating element 10, and the second free end is close to the top of the heating element 10. Specifically, in this embodiment, the first sub-section groups 1111 is implemented as four first sub-section groups. The two first sub-section groups 1111 in each heating section group 111a are disposed in parallel and spaced apart in the width direction of the glass plate 30, and the ends of two adjacent first sub-section groups 1111 in each heating section group 111a are electrically connected to each other through one connecting segment 1112.

Each first sub-section group 1111 is substantially U-shaped. Each first sub-section group 1111 includes two first sub-sections 1111a and a transition segment 1111b. The two first sub-sections 1111a extend in the length direction of the glass plate 30. In the length direction of the glass plate 30, the transition segment 1111b is connected to the ends of the two first sub-sections 1111a that are close to each other. In other embodiments, each first sub-section group 1111 may also have other shapes, such as a wave shape, a semicircle shape, etc. Each first sub-section group 1111 may also include other numbers of first sub-sections 1111a. For example, in the case where the first sub-sections 1111a in each first sub-section group 1111 is implemented as four first sub-sections, the first sub-section group 1111 as a whole is W-shaped. The first sub-sections 1111a in each first sub-section group 1111 may be implemented as six, seven, or eight, etc., which is not specifically limited in the embodiments of the disclosure.

In this embodiment, in the width direction of the glass plate 30, the distance between two adjacent first sub-section groups 1111 in each heating section group 111a ranges from 5mm to 50mm. In the width direction of the glass plate 30, the distance between two adjacent first sub-sections 1111a in each first sub-section group 1111 ranges from 5mm to 50mm. This is because the distribution density of the first sub-section groups 1111 in each heating section group 111a and the distribution density of the first sub-sections 1111a in each first sub-section group 1111 affect the heating effect of the first segment 111 on the second signal transmission region *B*.

The second segment 112 includes three second sub-segments 1121, and each second sub-segments 1121 is straight. The three second sub-segments 1121 are sequentially connected, and two mutually connected second sub-segments 1121 form an included angle. The included angles between the two second sub-segments 1121 on both sides and the middle second sub-segment 1121 are substantially the same. It may be understood that, the second segment 112 as a whole is substantially shaped as an isosceles triangle. In other embodiments, the second segment 112 may also include other numbers of second sub-segments 1121.

The third segment 113 is straight, and the third segments 113 is implemented as two third segments. The two third segments 113 are disposed side by side in the length direction of the glass plate 30.

In this embodiment, the heating electrodes 12 is implemented as two heating electrodes. The heating electrodes 12 may be formed by coating conductive silver paste, or may be conductive copper foil, or may be conductive aluminum foil, or the like.

In this embodiment, in the length direction of the glass plate 30, the two heating section groups 111a are oppositely disposed, and the two heating section groups 111a are respectively located on two opposite sides of the second segment 112. The two third segments 113 are respectively located between the two heating section groups 111a and are spaced apart from each other. The heating wire 11 is electrically connected to the heating electrodes 12. By respectively connecting the two heating electrodes 12 to a positive electrode and a negative electrode of an in-vehicle power supply, current can flow through the heating wire 11, thereby causing the heating wire 11 to generate heat.

Specifically, for one heating section group 111a, the first free end is electrically connected to the second segment 112, and the second free end is electrically connected to one third segment 113; for the other heating section group 111a, the first free end is electrically connected to the second segment 112, and the second free end is electrically connected to the other third segment 113. The two outer second sub-segments 1121 among the three second sub-segments 1121 are respectively electrically connected to the first free ends of the two heating section groups 111a. The ends of the two third segments 113 not connected to the heating section groups 111a are respectively electrically connected to the two heating electrodes 12. It may be understood that, both ends of each heating section group 111a are electrically connected to the second segment 112 and the third segment 113 respectively, so that the first segment 111, the second segment 112, and the third segment 113 as a whole form an electrical connection.

In this embodiment, the heating wire 11 is distributed outside the first signal transmission region *A*, and the heating wire 11 is at least partially located in the second signal transmission region *B*. The second segment 112 of the heating wire 11 is located in the second signal transmission region *B*. The second segment 112 of the heating wire 11 is disposed along a portion of the periphery of the first signal transmission region *A*. The two outer second sub-segments 1121 among the three second sub-segments 1121 are respectively disposed along portions of edges of two opposite lengthwise sides of the first signal transmission region *A*, and the middle second sub-segment 1121 among the three second sub-segments 1121 is disposed along a portion of an edge of a widthwise end of the first signal transmission region *A*. The first segment 111 is located on the glass plate 30 at a position corresponding to the sensor 20, and is kept clear of the first light-transmitting region *C* and the second light-transmitting region *D*, so as to avoid physically blocking the signals from the rain sensor and the ETC device. Specifically, the distance between the heating wire 11 and the rain sensor is greater than or equal to 30mm. The third segment 113 is located on the glass plate 30 at a position corresponding to the sensor 20.

It may be understood that, by energizing the heating wire 11 through the two heating electrodes 12, the heating wire 11 can generate heat to heat the position on the glass plate 30 corresponding to the location of the heating wire 11, thereby removing water, fog, frost, and the like from the position on the glass plate 30 corresponding to the location of the heating wire 11. Since the heating wire 11 is kept clear of the first signal transmission region *A*, when the first sensor 21 is used to acquire image information, the heating wire 11 can be prevented from physically blocking the light from entering the first sensor 21, facilitating the first sensor 21 in obtaining complete image information. In addition, the heating wire 11 can be prevented from reflecting light, thereby avoiding affecting the accuracy of the image information obtained by the first sensor 21.

In addition, the second segment 112 of the heating wire 11 is disposed around the periphery of the first signal transmission region *A*. When the second segment 112 generates heat, the heat can be quickly transferred through the glass plate 30 to the interior of the first signal transmission region *A*. Therefore, the heating wire 11 can remove water, fog, or frost from the interior of the first signal transmission region *A*.

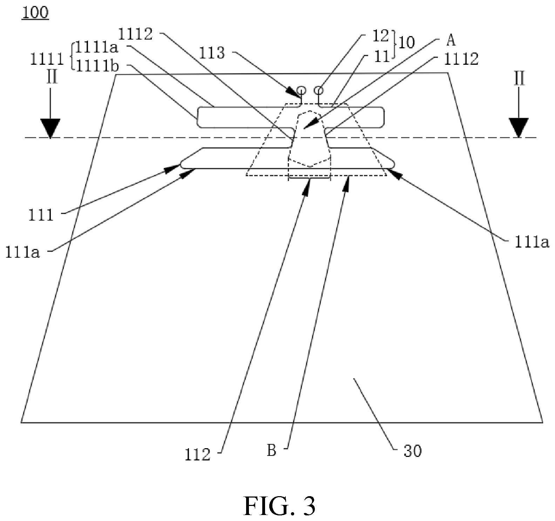

Referring to FIG. 3, a second embodiment of the heating element 10 of the vehicle window assembly 100 is provided. In this embodiment, the heating element 10 includes the heating wire 11 and the heating electrodes 12. The difference between this embodiment and the first embodiment lies in that the structure of the second segment 112 of the heating wire 11 is different, and the relative positional relationship between the heating wire 11 and the first signal transmission region *A*/the second signal transmission region *B* is different.

In this embodiment, the second segment 112 is straight. The two heating section groups 111a of the first segment 111 are oppositely disposed in the length direction of the glass plate 30, and the two heating section groups 111a are electrically connected through the second segment 112. In the length direction of the glass plate 30, the two third segments 113 are respectively located between the two heating section groups 111a and are spaced apart from each other. The two heating section groups 111a are respectively connected to the two heating electrodes 12 through the two third segments 113.

In this embodiment, the heating wire 11 is distributed outside the first signal transmission region *A*, and the heating wire 11 is at least partially located in the second signal transmission region *B*. A portion of the first segment 111 of the heating wire 11 is located in the second signal transmission region *B*, and another portion of the first segment 111 of the heating wire 11 is located outside the second signal transmission region *B*. In the width direction of the glass plate 30, the width of each heating section group 111a is denoted as *L*2, and *L*2 is greater than *L*0. The connecting segments 1112 of the two heating section groups 111a are respectively disposed along portions of edges of two opposite lengthwise sides of the first signal transmission region *A*. Specifically, in this embodiment, the connecting segments 1112 of the two heating section groups 111a coincide with the portions of edges of the two opposite lengthwise sides of the first signal transmission region *A* (a certain dimensional tolerance is allowed). The second segment 112 is disposed along an edge of a widthwise end of the first signal transmission region *A*. The third segment 113 is located outside the first signal transmission region *A* and the second signal transmission region *B*. Specifically, the third segment 113 is located on the inner surface 31 of the glass plate 30 at a position corresponding to the sensor 20. In other embodiments, the connecting segments 1112 of the two heating section groups 111a may be spaced apart from the portions of edges of the first signal transmission region *A*, and the first segment 111 of the heating wire 11 may be completely located in the second signal transmission region *B*.

In this embodiment, in the width direction of the glass plate 30, the distance between two adjacent first sub-sections group 1111 in each heating section group 111a ranges from 5mm to 50mm. In the width direction of the glass plate 30, the distance between two adjacent first sub-sections 1111a in each first sub-section group 1111 ranges from 5mm to 50mm. This is because the distribution density of the first sub-section groups 1111 in each heating section group 111a and the distribution density of the first sub-sections 1111a in each first sub-section group 1111 may affect the heating effect of the first segment 111 on the first signal transmission region *A* and the first signal transmission region *B*.

It may be understood that, in this embodiment, since the heating wire 11 is arranged to be kept clear of the first signal transmission region *A*, when the first sensor 21 is used to obtain optical information, the heating wire 11 can be prevented from physically blocking the light from entering the first sensor 21, thereby facilitating the first sensor 21 in obtaining complete optical information. In addition, such arrangement can prevent the heating wire 11 from reflecting light, thereby avoiding affecting the accuracy of the optical information obtained by the first sensor 21. Moreover, the heating wire 11 is distributed in the second signal transmission region *B*, which can ensure the heating effect of the heating wire 11 on the second signal transmission region *B*, so that the heating wire 11 can remove water, fog, or frost from the second signal transmission region *B*, improving the accuracy of the image information obtained by the second sensor 22.

Furthermore, the connecting segments 1112 of the two heating section groups 111a are respectively disposed along portions of edges of two opposite lengthwise sides of the first signal transmission region *A*. The heat of the connecting segments 1112 can be transferred through the glass plate 30 from the two opposite lengthwise sides of the first signal transmission region *A* to the interior of the first signal transmission region *A*. The second segment 112 is disposed along an edge of a widthwise end of the first signal transmission region *A*. The heat of the second segment 112 can also be transferred through the glass plate 30 from the widthwise end of the first signal transmission region *A* to the interior of the first signal transmission region *A*.

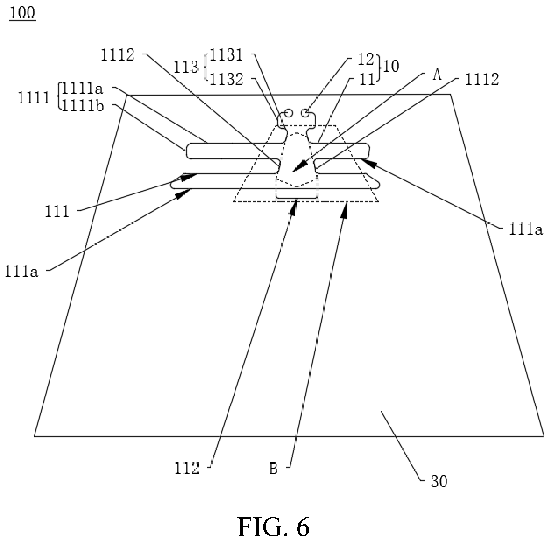

Referring to FIG. 6, a third embodiment of the heating element 10 of the vehicle window assembly 100 is provided. In this embodiment, the heating element 10 includes the heating wire 11 and the heating electrodes 12. The difference between this embodiment and the second embodiment lies in that the structure of the third segment 113 of the heating wire 11 is different, and that the relative positional relationship between the heating wire 11 and the first signal transmission region *A*/the second signal transmission region *B* is different.

In this embodiment, the third segment 113 includes a straight segment 1131 and a bent segment 1132. The straight segment 1131 extends in a straight line, and the bent segment 1132 is substantially C-shaped. The straight segment 1131 and the bent segment 1132 are electrically connected to each other. Both the straight segment 1131 and the bent segment 1132 have a free end. The third segment 113 is implemented as two third segments. In other embodiments, the bent segment 1132 may have other shapes, such as a "Z" shape.

In this embodiment, the second segment 112 is straight, and the two heating section groups 111a are respectively electrically connected to the two ends of the second segment 112. The two third segments 113 are oppositely disposed in the length direction of the glass plate 30, and the two third segments 113 are respectively electrically connected to the two heating section groups 111a. Specifically, the free ends of the straight segments 1131 of the two third segments 113 are respectively electrically connected to the second free ends of the two heating section groups 111a, and the free ends of the bent segments 1132 of the two third segments 113 are respectively electrically connected to the two heating electrodes 12.

In this embodiment, in the width direction of the glass plate 30, the distance between two adjacent first sub-section groups 1111 in each heating section group 111a ranges from 5mm to 50mm. In the width direction of the glass plate 30, the distance between two adjacent first sub-sections 1111a in each first sub-section group 1111 ranges from 5mm to 50mm. This is because the distribution density of the first sub-section groups 1111 in each heating section group 111a and the distribution density of the first sub-sections 1111a in each first sub-section group 1111 may affect the heating effect of the first segment 111 on the first signal transmission region *A* and the first signal transmission region *B*. In this embodiment, in the width direction of the glass plate 30, the width of the connecting segment 1112, the width of the transition segment 1111b, and the width of the straight segment 1131 of the third segment 113 are all the same, and are all equal to *L*0/4 (a certain dimensional tolerance is allowed).

In this embodiment, the heating wire 11 is distributed outside the first signal transmission region *A*, and the heating wire 11 is at least partially located in the second signal transmission region *B*. A portion of the first segment 111 of the heating wire 11 is located in the second signal transmission region *B*, and another portion of the first segment 111 of the heating wire 11 is located outside the second signal transmission region *B*. In the width direction of the glass plate 30, the first signal transmission region *A* is located between the straight segment 1131 of the third segment 113 and the second segment 112. The second segment 112 is disposed along an edge of a widthwise end of the first signal transmission region *A*, and the straight segment 1131 is disposed along a portion of an edge of another widthwise end of the first signal transmission region *A*. The connecting segments 1112 of the two heating section groups 111a are disposed along portions of edges of two opposite lengthwise sides of the first signal transmission region *A*. Specifically, in this embodiment, the straight segment 1131 coincides with the portion of the edge of the widthwise end of the first signal transmission region *A* (a certain dimensional tolerance is allowed). The connecting segments 1112 of the two heating section groups 111a coincide with the portions of edges of the two lengthwise sides of the first signal transmission region *A* (a certain dimensional tolerance is allowed). The bent segment 1132 of the third segment 113 is located outside the first signal transmission region *A* and the second signal transmission region *B*. Specifically, the bent segment 1132 of the third segment 113 is located on the inner surface 31 of the glass plate 30 at a position corresponding to the sensor 20. In other embodiments, the straight segment 1131 may be spaced apart from the portion of the edge of another widthwise end of the first signal transmission region *A*, the connecting segments 1112 of the two heating section groups 111a may be spaced apart from the portions of edges of the first signal transmission region *A*, and the first segment 111 of the heating wire 11 may be completely located in the second signal transmission region *B*.

It may be understood that, in this embodiment, since the heating wire 11 is arranged to be kept clear of the first signal transmission region *A*, when the first sensor 21 is used to obtain optical information, the heating wire 11 can be prevented from physically blocking the light from entering the first sensor 21, thereby facilitating the first sensor 21 in obtaining complete optical information. In addition, such arrangement can prevent the heating wire 11 from reflecting light, thereby avoiding affecting the accuracy of the optical information obtained by the first sensor 21. Moreover, the heating wire 11 is distributed in the second signal transmission region *B*, which can ensure the heating effect of the heating wire 11 on the second signal transmission region *B*, so that the heating wire 11 can remove water, fog, or frost from the second signal transmission region *B*, improving the accuracy of the image information obtained by the second sensor 22. By providing the bent segment 1132 in the third segment 113, the heating efficiency of the heating element 10 for the position on the glass plate 30 corresponding to the sensor 20 can be improved.

Furthermore, the second segment 112 is disposed along an edge of a widthwise end of the first signal transmission region *A*, the straight segment 1131 is disposed along a portion of an edge of another widthwise end of the first signal transmission region *A*, and the connecting segments 1112 of the two heating section groups 111a are disposed along portions of edges of two opposite lengthwise sides of the first signal transmission region *A*. This configuration may allow heat to be transmitted through the glass plate 30 to the first signal transmission region *A* from both opposite widthwise ends and both opposite lengthwise sides of the first signal transmission region *A*, ensuring the heating uniformity and heating rate of the first signal transmission region *A* while ensuring that the first signal transmission region *A* is not physically blocked.

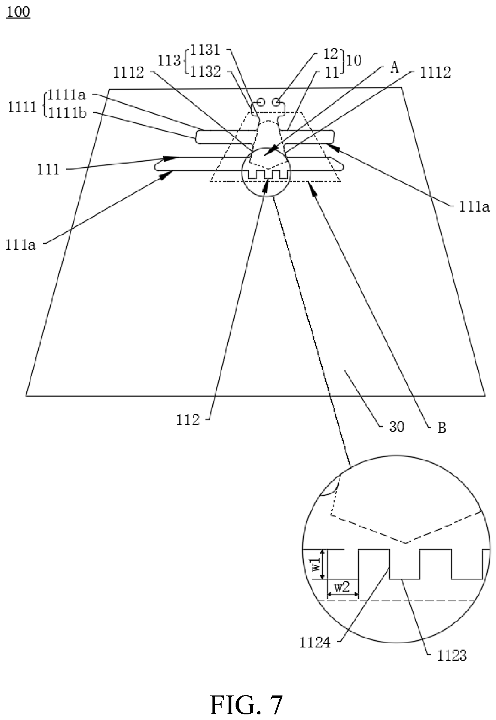

Referring to FIG. 7, a fourth embodiment of the heating element 10 of the vehicle window assembly 100 is provided. In this embodiment, the heating element 10 includes the heating wire 11 and the heating electrodes 12. The difference between this embodiment and the third embodiment lies in that the structure of the second segment 112 of the heating wire 11 is different.

In this embodiment, the second segment 112 is configured in a zigzag pattern. The second segment 112 includes multiple third sub-segments 1123 and multiple connecting sub-segments 1124. Two adjacent third sub-segments 1123 are connected via a corresponding connecting sub-segment 1124. Each third sub-segment 1123 extends in the length direction of the glass plate 30, and each connecting sub-segment 1124 extends in the width direction of the glass plate 30. The multiple connecting sub-segments 1124 are spaced apart from each other in the length direction of the glass plate 30. Each third sub-segment 1123 is used to electrically connect the ends of two adjacent connecting sub-segments 1124 that are close to each other.

In this embodiment, the dimension of each third sub-segment 1123 in the length direction of the glass plate 30 is denoted as *w*2, and *w*2 is greater than or equal to 5mm. In other embodiments, the heating wire 11 is an enameled wire. To meet the process requirements of a manipulator for arranging the multiple third sub-segments 1123, *w*2 is greater than or equal to 12mm. Since some of the third sub-segments 1123 of the second segment 112 are away from the bottom of the first signal transmission region *A*, if *w*2 is too small, the heating effect of the second segment 112 on the first signal transmission region *A* may be affected. In this way, the heating effect of the second segment 112 on the first signal transmission region *A* can be ensured. Preferably, *w*2 is greater than or equal to 5mm and smaller than the distance between two adjacent first sub-section groups 1111 in each heating section group 111a along the width direction of the glass plate 30.

In this embodiment, in the width direction of the glass plate 30, the width *w*1 of each connecting sub-segment 1124 is less than or equal to 20mm. Since the width *w*1 of the connecting sub-segment 1124 affects the heating effect of the second segment 112 on the first signal transmission region *A*, *w*1 is set to be less than or equal to 20mm. In this way, the heating effect of the second segment 112 on the first signal transmission region *A* can be ensured.

In this embodiment, the heating wire 11 is distributed outside the first signal transmission region *A*, and the heating wire 11 is at least partially located in the second signal transmission region *B*. A portion of the first segment 111 of the heating wire 11 is located in the second signal transmission region *B*, and another portion is located outside the second signal transmission region *B*. In the width direction of the glass plate 30, the first signal transmission region *A* is located between the second segment 112 and the straight segment 1131 of the third segment 113. The second segment 112 is disposed along an edge of a widthwise end of the first signal transmission region *A*, and the straight segment 1131 is disposed along a portion of an edge of another widthwise end of the first signal transmission region *A*. The connecting segments 1112 of the two heating section groups 111a are disposed along portions of edges of two opposite lengthwise sides of the first signal transmission region *A*. Specifically, in this embodiment, the straight segment 1131 coincides with the portion of the edge of the widthwise end of the first signal transmission region *A* (a certain dimensional tolerance is allowed). The connecting segments 1112 of the two heating section groups 111a coincide with the portions of edges of the two lengthwise sides of the first signal transmission region *A* (a certain dimensional tolerance is allowed). The bent segment 1132 of the third segment 113 is located outside the first signal transmission region *A* and the second signal transmission region *B*. Specifically, the bent segment 1132 of the third segment 113 is located on the inner surface 31 of the glass plate 30 at a position corresponding to the sensor 20. In other embodiments, the straight segment 1131 may be spaced apart from the portion of the edge of the widthwise end of the first signal transmission region *A*, the connecting segments 1112 of the two heating section groups 111a may be spaced apart from the portions of edges of the first signal transmission region *A*, and the first segment 111 of the heating wire 11 may be completely located in the second signal transmission region *B*.

In this embodiment, in the width direction of the glass plate 30, the distance between two adjacent first sub-section groups 1111 in each heating section group 111a ranges from 5mm to 50mm. In the width direction of the glass plate 30, the distance between two adjacent first sub-sections 1111a in each first sub-section group 1111 ranges from 5mm to 50mm. This is because the distribution density of the first sub-section groups 1111 in each heating section group 111a and the distribution density of the first sub-sections 1111a in each first sub-section group 1111 affect the heating effect of the first segment 111 on the first signal transmission region *A* and the first signal transmission region *B*. In this embodiment, in the width direction of the glass plate 30, the width of the connecting segment 1112, the width of the transition segment 1111b, and the width of the straight segment 1131 of the third segment 113 are all the same, and are all equal to *L*0/4 (a certain dimensional tolerance is allowed).

It may be understood that, in this embodiment, since the heating wire 11 is arranged to be kept clear of the first signal transmission region *A*, when the first sensor 21 is used to obtain optical information, the heating wire 11 can be prevented from physically blocking the light from entering the first sensor 21, thereby facilitating the first sensor 21 in obtaining complete optical information. In addition, such arrangement can prevent the heating wire 11 from reflecting light, thereby avoiding affecting the accuracy of the optical information obtained by the first sensor 21. Moreover, the heating wire 11 is distributed in the second signal transmission region *B*, which can ensure the heating effect of the heating wire 11 on the second signal transmission region *B*, so that the heating wire 11 can remove water, fog, or frost from the second signal transmission region *B*, improving the accuracy of the image information obtained by the second sensor 22. By providing the bent segment 1132 in the third segment 113, the heating efficiency of the heating element 10 for the position on the glass plate 30 corresponding to the sensor 20 can be improved.

Furthermore, the second segment 112 is disposed along an edge of a widthwise end of the first signal transmission region *A*, the straight segment 1131 is disposed along a portion of an edge of another widthwise end of the first signal transmission region *A*, and the connecting segments 1112 of the two heating section groups 111a are disposed along portions of edges of two opposite lengthwise sides of the first signal transmission region *A*. This configuration may allow heat to be transmitted through the glass plate 30 to the first signal transmission region *A* from both opposite widthwise ends and both opposite lengthwise sides of the first signal transmission region *A*, ensuring the heating effect of the first signal transmission region *A* while ensuring that the first signal transmission region *A* is not physically blocked. Configuring the second segment 112 in a zigzag pattern can increase the length of the second segment 112, thereby improving the heating efficiency for the first signal transmission region *A* and the second signal transmission region *B*.

In a possible embodiment, the heating wire 11 is disposed around at least three edges of the first signal transmission region *A*. Specifically, in the first embodiment, the second embodiment, the third embodiment, and the fourth embodiment of the disclosure, the heating wire 11 is disposed around three edges of the first signal transmission region *A*.

In a possible embodiment, as illustrated in FIG. 2, to improve the aesthetics of the vehicle window assembly 100, a black edge region 40 is provided on the periphery of the glass plate 30. The black edge region 40 may be used to conceal and protect components inside the vehicle. On one hand, the black edge region 40 can conceal the components inside the vehicle to ensure overall aesthetic appearance for external observation. On the other hand, the black edge region 40 can play a role in anti-ultraviolet radiation, preventing the components inside the vehicle 1000 from being directly exposed to sunlight, so as to avoid aging and damage to the components, thereby improving the service life of the components inside the vehicle 1000.

In a possible embodiment, the first sensor 21 is implemented as at least one first sensor, and the second sensor 22 is implemented as at least one second sensor.

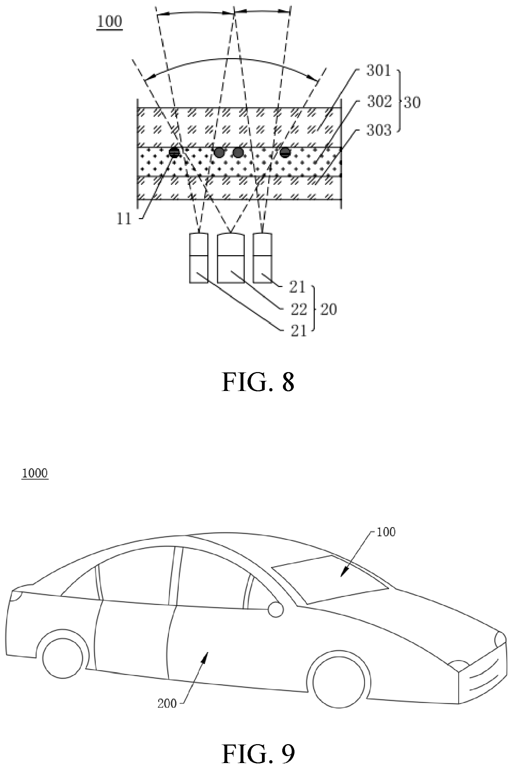

In a possible embodiment, as illustrated in FIG. 8, the first sensor 21 is implemented as two first sensors, and the two first sensors 21 are respectively spaced apart from the second sensor 22. In this embodiment, the glass plate 30 includes two first signal transmission regions *A* and one second signal transmission region *B*. Both first signal transmission regions *A* are at least partially located in the second signal transmission region *B*. The at least one heating wire 11 is kept clear of the two first signal transmission regions *A*, and is at least partially disposed in the second signal transmission region *B*.

In a possible embodiment, the at least one heating wire 11 is disposed around at least a portion of peripheries of the two first signal transmission regions *A*.

In a possible embodiment, the first sensor 21 and/or the second sensor 22 is/are selected from at least one of a visible light camera, an infrared camera, or a laser radar.

The disclosure further provides a vehicle 1000. Reference is made to FIG. 9. The vehicle 1000 includes a vehicle body 200 and the vehicle window assembly 100 as described above. The vehicle window assembly 100 is mounted to the vehicle body 200. For a specific illustration of the vehicle window assembly 100, reference may be made to the illustration above, which will not be repeated here.

It may be noted that, the vehicle window assembly 100 may be a side window, a sunroof, or a rear window, and the vehicle 1000 may be a car such as a sedan, a sports utility vehicle, a multi-purpose business vehicle, a sports car, or a van.

The embodiments of the disclosure are described in detail above. The principle and implementation of the disclosure are described herein through specific examples. The illustration about the embodiments is merely provided to help understand the method and core ideas of the disclosure. In addition, a person of ordinary skill in the art can make modifications to the disclosure in terms of the specific implementations and application scopes based on the ideas of the disclosure. Therefore, the content of this specification shall not be construed as a limit to the disclosure.

## Claims

1. A vehicle window assembly, comprising a glass plate, a heating element, and a sensor; wherein
the sensor is disposed on an inner side of the glass plate, the sensor comprises a first sensor and a second sensor, and the first sensor and the second sensor are spaced apart from each other;
the glass plate comprises a first signal transmission region and a second signal transmission region, wherein the first signal transmission region is a signal transmission region of the glass plate for the first sensor, the second signal transmission region is a signal transmission region of the glass plate for the second sensor, and the first signal transmission region is at least partially located in the second signal transmission region; and
the heating element comprises at least one heating wire, wherein the at least one heating wire is kept clear of the first signal transmission region and is at least partially disposed in the second signal transmission region.

2. The vehicle window assembly according to claim 1, wherein the at least one heating wire is disposed around at least a portion of a periphery of the first signal transmission region.

3. The vehicle window assembly according to claim 2, wherein each heating wire comprises a first segment and a second segment;
the first segment comprises two heating section groups, and the two heating section groups are oppositely disposed in a length direction of the glass plate;
each heating section group comprises a plurality of first sub-section groups and at least one connecting segment, wherein each connecting segment connects two adjacent first sub-section groups, the plurality of first sub-section groups of each heating section group are disposed in parallel and spaced apart in a width direction of the glass plate, two adjacent first sub-section groups are electrically connected via a corresponding connecting segment, and each heating section group has a first free end and a second free end; and
two ends of the second segment are respectively electrically connected to the first free ends of the two heating section groups, and the second segment is disposed along a portion of an edge of the first signal transmission region.

4. The vehicle window assembly according to claim 3, wherein the heating element further comprises two heating electrodes, each heating wire further comprises two third segments, and the two third segments are oppositely disposed in the length direction of the glass plate; and
an end of each of the two third segments is electrically connected to the second free end of a corresponding one of the two heating section groups, and another end of each of the two third segments is electrically connected to a corresponding one of the two heating electrodes.

5. The vehicle window assembly according to claim 4, wherein the second segment comprises three second sub-segments, each second sub-segment is straight, the three second sub-segments are sequentially connected, and two mutually connected second sub-segments form an included angle; and
two outer second sub-segments among the three second sub-segments are respectively electrically connected to the first free ends of the two heating section groups, and are respectively disposed along portions of edges of two opposite lengthwise sides of the first signal transmission region, and a middle second sub-segment among the three second sub-segments is disposed along a portion of an edge of a widthwise end of the first signal transmission region.

6. The vehicle window assembly according to claim 4, wherein the second segment is straight, and the second segment extends in the length direction of the glass plate; and
the connecting segments of the two heating section groups are respectively disposed along portions of edges of two opposite lengthwise sides of the first signal transmission region, and the second segment is disposed along a portion of an edge of a widthwise end of the first signal transmission region.

7. The vehicle window assembly according to claim 4, wherein the second segment is configured in a zigzag pattern, the second segment comprises a plurality of third sub-segments and a plurality of connecting sub-segments, and two adjacent third sub-segments are electrically connected via a corresponding connecting sub-segment; and
two outer third sub-segments among the plurality of third sub-segments are respectively electrically connected to the first free ends of the two heating section groups, the second segment is disposed along a portion of an edge of a widthwise end of the first signal transmission region, and the connecting segments of the two heating section groups are respectively disposed along portions of edges of two opposite lengthwise sides of the first signal transmission region.

8. The vehicle window assembly according to any one of claims 4 to 7, wherein each third segment comprises a straight segment and a bent segment, and the straight segment and the bent segment are connected to each other, free ends of the two straight segments are respectively electrically connected to the second free ends of the two heating section groups, and free ends of the two bent segments are respectively electrically connected to the two heating electrodes;
the two straight segments are disposed along a portion of an edge of another widthwise end of the first signal transmission region.

9. The vehicle window assembly according to any one of claims 3 to 7, wherein in the width direction of the glass plate, a distance between two adjacent first sub-section groups in each heating section group ranges from 5mm to 50mm.

10. The vehicle window assembly according to claim 9, wherein in the width direction of the glass plate, each first sub-section group comprises two first sub-sections and a transition segment, the two first sub-sections extend in the length direction of the glass plate, and in the length direction of the glass plate, the transition segment is connected to ends of the two first sub-sections that are close to each other; and
in the width direction of the glass plate, a distance between the two first sub-sections of each first sub-section group ranges from 5mm to 50mm.

11. The vehicle window assembly according to any one of claims 1 to 7, wherein in the width direction of the glass plate, a width of the first signal transmission region is denoted as *L*0, wherein *L*0 satisfies 50mm ≤ *L*0 ≤ 100mm.

12. The vehicle window assembly according to claim 7, wherein each third sub-segment extends in the length direction of the glass plate, each connecting sub-segment extends in the width direction of the glass plate, the plurality of connecting sub-segments are spaced apart in the length direction of the glass plate, and each third sub-segment is used to electrically connect ends of two adjacent connecting sub-segments that are close to each other; and
in the width direction of the glass plate, a width *w*1 of each connecting sub-segment is less than or equal to 20mm.

13. The vehicle window assembly according to claim 12, wherein in the length direction of the glass plate, a length *w*2 of each third sub-segment is greater than or equal to 5mm.

14. The vehicle window assembly according to any one of claims 1 to 7, wherein the heating wire is an enameled wire or a silver paste printing wire.

15. The vehicle window assembly according to claim 14, wherein a total length of the heating wire ranges from 0.8m to 5m.

16. The vehicle window assembly according to any one of claims 3 to 7, wherein the heating wire is disposed around at least three edges of the first signal transmission region.

17. The vehicle window assembly according to claim 1, wherein the vehicle window assembly further comprises a rain sensor, and a distance between the heating wire and the rain sensor is greater than or equal to 30mm.

18. The vehicle window assembly according to claim 1, wherein the glass plate is a monolithic glass, and the heating element is fixed between the glass plate and the sensor.

19. The vehicle window assembly according to claim 1, wherein the glass plate is a laminated glass, the laminated glass comprises a first glass plate, an intermediate layer, and a second glass plate, wherein the intermediate layer is bonded between the first glass plate and the second glass plate, and the heating element is fixed between the first glass plate and the sensor.

20. The vehicle window assembly according to claim 1, wherein the first sensor is implemented as at least one first sensor, and the second sensor is implemented as at least one second sensor.

21. The vehicle window assembly according to claim 1, wherein the first sensor and/or the second sensor is/are selected from at least one of a visible light camera, an infrared camera, or a laser radar.

22. A vehicle, comprising a vehicle body and the vehicle window assembly according to any one of claims 1 to 21, wherein the vehicle window assembly is mounted to the vehicle body.
